# EUROPEAN PATENT SPECIFICATION

(11) **EP 0 964 809 B1**
(45) Date of publication and mention of the grant of the patent: **18.09.2002**
(21) Application number: 98908328.2
(22) Date of filing: 05.03.1998
(51) Int. Cl.: B61D 47/00, B65G 63/02, B61B 1/00

(54) **TERMINAL FOR TRANSFERRING CONTAINERS, AND A CONTAINER CAR**
UMSCHLAGEINRICHTUNG FÜR CONTAINER UND EIN EISENBAHNWAGEN
TERMINAL DE TRANSFERT DE CONTENEURS ET WAGON PORTE-CONTENEURS

(30) Priority: 06.03.1997 NL 1005455; 07.03.1997 NL 1005475
(43) Date of publication of application: 22.12.1999
(73) Proprietor: Harry Nijenhuis Management B.V., 7901 TA Hoogeveen (NL)
(72) Inventor: NIJENHUIS, Harry, NL-7901 TA Hoogeveen (NL)
(74) Representative: de Bruijn, Leendert C.
(86) International application number: NL9800128
(87) International publication number: WO98039192

(56) References cited:
- EP-B- 0 509 028
- DE-A- 2 951 271
- DE-A- 3 037 031
- DE-A- 4 316 535
- DE-A- 4 429 710
- FR-A- 2 427 978
- FR-A- 2 737 710

## Description

The present invention relates to a terminal for transferring containers, in particular a railway terminal for loading railway wagons with containers and/or unloading railway wagons which are laden with containers. according to the preamble of claim 1.

As will become clear subsequently, the present invention applies in a general sense to a terminal for transferring containers. A terminal of this kind may, for example, be a lorry terminal for loading lorries with containers and/or unloading lorries which are laden with containers, in which case the section of track will more broadly be a drive-on or drive-off section, in particular for lorries. The present invention therefore relates in a general sense to a terminal for transferring containers, the terminal comprising a drive-on-drive-off section (for example for lorries or railway wagons), and at least one platform, which is arranged along and adjacent to the said drive-on/drive-off section and is at a higher level than the said drive-on/drive-off section. Although the following description will deal essentially with a railway terminal, it will however be clear that the principle of the invention can also be applied in a general manner to terminals for transferring containers. According to a special embodiment the invention relates to this railway terminal.

A terminal of this kind is generally known. At a railway terminal of this kind, and also at a railway terminal according to the invention, so-called 20-foot, 30-foot and 40-foot containers can be loaded from the train onto lorries and from the lorry onto the train. In this case, the railway wagons have an essentially flat loading floor. By means of so-called trolleys, such as for example those which are known from and described in the European Patent EP-B1-0,509,028, the containers can then be displaced in their transverse direction in order to be moved from the platform onto the railway wagons or from the railway wagons onto the platform.

It is a time-consuming operation to use the trolleys to transfer the containers sideways from the loading platform onto a railway wagon and, at a further railway terminal, to transfer them again from the railway wagon onto an unloading platform, since the trolleys always have to be positioned correctly against the end sides of the container prior to the transfer movement, and after positioning the trolleys in this way the container can be lifted by means of the trolleys, transferred, put down at its designated destination, and then finally the trolleys have to be uncoupled again from the containers. The coupling and uncoupling of the trolleys, in particular, represent time-consuming and labour-intensive operations. The trolleys are relatively heavy and unwieldy, and consequently are less easy to handle. As a result, coupling and uncoupling the trolleys require time, and an operator is required to couple and uncouple each trolley. This delays the rate at which containers can be transferred from the platform onto a railway wagon and from a railway wagon onto the platform. It is also conceivable to transfer the containers from the platform onto the railway wagon, and vice versa, by means of crane installations. However, such a method cannot be used for railways with overhead lines. Furthermore, it is known to transfer the containers from the platform onto a railway wagon, and vice versa, by means of fork-lift trucks or numerous other complex installations.

A terminal according to the preamble of claim 1 is known from FR-A-2,427,978. This publication discloses an assembly of a lorry and railway wagon. Both the lorry and the wagon are provided with two slots each. The lorry is provided with two support beams, one per slot. Those beams can be extended from the lorry out of its slots into the slots of the wagon and back to move a container from the lorry to the wagon or from the wagon to the lorry.

The object of the present invention is to provide an improved terminal, such as a railway terminal, and in particular to provide a terminal where the transfer time required to transfer a container is reduced.

This object is achieved with a terminal according to claim 1. A structure of this kind can be realized by relatively simple means and offers the major advantage that the containers, on arrival at the railway terminal on the supply lorries, can be placed directly above at least two slots, after which they can be transferred, by means of the beam-like support, from the loading platform to above the section of track, in particular a railway wagon situated thereon. In this case, the top side of the beam-like support may protrude slightly above the loading or unloading platform, so that the container which is to be displaced sideways over the platform does not come into contact with the top surface of the platform. The railway wagon on which the containers are to be placed or from which they are to be unloaded may in this case be provided with jacks or cylinder/piston assemblies acting in the vertical direction. Such jacks or cylinder/piston assemblies can then lift the container, which is supported by the supports, which in this case act as cantilevered arms, off this support, after which the supports can be moved back into their retracted position, in order then to allow the container to be lowered onto the loading floor of the railway wagon with the aid of the jacks or cylinder/piston assemblies.

In order to counteract obstacles projecting out of the platforms, the slots and/or supports are provided with lifting means, by means of which each support can be moved up and down between a position in which it is recessed in the respective slot and a raised position in which its upper bearing surface projects above the loading and/or unloading platform. Then, when it is necessary to transfer a container, the supports can be moved upwards until the top bearing surface thereof projects sufficiently far, for example 3 to 5 cm, above the top surface of the platform in question. However, the supports may also be moved further upwards, for example until the top surface thereof lies approximately 10 cm above the top surface of the platform. Lifting means of this kind can be realized in a variety of manners.

According to the invention the lifting means comprise rollers and/or wheels which can be moved up and down with respect to the loading and/or unloading platform and are arranged on the loading and/or unloading platform. These rollers and/or wheels are in this case vertically adjustable and on their top side bear the support, which on being extended and withdrawn will set the rollers and/or wheels in rotation. The arrangement of these rollers and/or wheels on the loading and/or unloading platform in this case has the advantage that the lifting means providing the lifting force may be accommodated in the loading and/or unloading platform, so that there is little limit to their dimensions.

According to another advantageous embodiment, which can be used extremely well in combination with the embodiment discussed above, it is advantageous if the lifting means comprise rollers and/or wheels which can be moved up and down with respect to the supports and are arranged on the supports. Such rollers and/or wheels arranged on the supports make it possible to design the support entirely or partly as a type of independently movable car.

According to a further particular embodiment, in which the latter two embodiments are used in combination, it is thus possible according to the invention to realize a railway terminal in which the rollers and/or wheels which are arranged on the loading and/or unloading platform are situated, with respect to the rollers and/or wheels which are arranged on the support, on the track side of the loading and/or unloading platform, the rollers and/or wheels arranged on the support being at a distance from that end of the support which faces towards the track, said distance being greater than the sum of:
- the width of the railway wagon to be loaded and/or unloaded, and
- the distance from the rollers and/or wheels arranged on the loading and/or unloading platform to the railway wagon to be loaded or unloaded. In this way, it is possible to produce a support which, in the so-called projecting position, may be entirely cantilevered, in which case there is no need for the support to be supported on the railway wagon. The support may then, when it is in the so-called projecting position, be lowered vertically by actuating the lifting means and thus deposit the container on the railway wagon, after which the supports, which are in the lowered position, can be withdrawn again to the so-called retracted position. Conversely, in order to unload a container, these supports may be extended in the lowered position to the projecting position, after which the supports can be moved upwards by means of the lifting means in order to lift the container to be unloaded off the railway wagon, so as then to withdraw the supports from the projecting position into the retracted position in order to transfer the container to be unloaded onto the unloading platform. When the container is then situated above the unloading platform, the supports can be lowered again, by actuating the lifting means, in order to deposit the container on the unloading platform.

In order, in the so-called projecting position and also in the partly projecting position, to counteract tilting of the supports, possibly with a container thereon, it is advantageous according to the invention if each slot is provided with longitudinal guides with downwardly directed contact surfaces, on which the support can come to bear in the event of it tilting. According to a particular embodiment, longitudinal guides of this kind will accommodate the rollers and/or wheels which are arranged on the support with a vertical clearance. Consideration may be given here to, for example, U-shaped, horizontal guide rails, through which the rollers and/or wheels can be moved with a vertical clearance. Such a clearance then allows a slight degree of tilting, with the result that the rollers and/or wheels can roll along the upper guide surface of the U-shaped guide, while in the untilted position the rollers and/or wheels can roll along the bottom guide face of the U-shaped guide.

A wide variety of drive means are conceivable for moving the supports to and fro in the longitudinal direction. According to an advantageous embodiment of the invention, a hydraulic cylinder/piston unit is provided for each support, which cylinder/piston unit is arranged in the loading and/or unloading platform, extends in the longitudinal direction of the support and is attached, on the one hand, to the support, preferably by means of the piston rod, and, on the other hand, to the loading and/or unloading platform, preferably by means of the cylinder housing.

The loading and unloading of containers using a railway terminal according to the invention can be facilitated in particular if the said railway terminal in accordance with the invention furthermore comprises at least one railway wagon, the loading floor of which is provided with at least two grooves, which extend over its entire width, are open towards the longitudinal sides of the railway wagon and have a width which is greater than the width of an abovementioned support, in which case, on the one hand, the distance between at least two of these grooves is less than the length of a container to be loaded and unloaded and, on the other hand, the mutual positioning of at least two of these grooves is such that they can each be aligned with a slot in the loading and/or unloading platform. Grooves of this kind can then accommodate the supports when they project out of the platform, with the result that the vertical movement of the container which is still required in order for it to be deposited on the railway wagon or, conversely, for it to be lifted off the railway wagon is reduced.

In order to facilitate aligning the grooves in the railway wagons with the slots in the adjoining platforms, it is advantageous according to the invention if the width of each groove is greater, preferably at least 5 cm greater, than the width of the supports, and is, for example, 10 to 20 cm greater than the width of the supports. Consideration may be given, for example, to a groove which is 15 cm wider than the support to be accommodated therein.

According to a further advantageous embodiment, the depth of the grooves in the railway wagons will be greater than the total height of that part of the supports which is accommodated therein. This makes special means which are able to move the container up and down in the vertical direction with respect to the loading floor superfluous. By actuating the lifting means arranged on the support and/or the platform, it then becomes possible to allow the supports to be lowered into the groove, the container then being deposited on the loading floor of the railway wagon. It will be clear that, conversely, it is possible to lift the containers off the loading floor of the railway wagon by suitable actuation of the lifting means which are arranged on the supports and/or the platform.

According to a further advantageous embodiment of the invention, the wagon may be provided with setting means for adjusting the height of the superstructure, comprising the loading floor, of the wagon with respect to the substructure of the wagon. If the grooves formed in the wagon have a depth which is greater than the height of the supports, it is possible, as soon as a container is placed above the railway wagon by means of the supports, to move the loading floor of the railway wagon upwards and thus lift the container off the supports, after which the supports can be withdrawn. In order then to unload a container, it is possible to move the railway wagon, together with the container, upwards, to move the supports inwards through the grooves and to lower the railway wagon and to return the container, which is now resting on the supports, to the platform by withdrawing the supports. In this case, it is possible to dispense entirely with lifting means acting on the supports themselves. The supports may then be designed as a simple supporting beam which can be withdrawn and extended from the platform and will project with its upper support surface slightly above the top surface of the platform, in order to prevent contact between the bottom face of the container and the platform during the sideways movement of the container.

The present invention also relates to a railway wagon for containers, in which the loading floor is provided with at least two grooves, which extend over its entire width and are open towards the sides of the railway wagon, in which case the distance between at least two of these grooves is less than the length of a container to be loaded and unloaded. In this case, the railway wagon may advantageously also be provided with setting means for adjusting the height of the superstructure, comprising the loading floor, of the wagon with respect to the substructure of the wagon.

From the preceding text, it will be clear that the beam-like supports may also be designed as a type of car which can be moved through the slots in the platform and the grooves in the railway wagons. These cars are then advantageously provided with the abovementioned lifting means arranged on the supports, in order to be able to adjust the wheels and/or rollers of these supports with respect to these supports. In order, when connecting a slot formed in the platform to a groove formed in the railway wagon, to be able to overcome differences in height between their bases, it may be advantageous here for the wheels and/or rollers used to be assemblies such as those which are described in the European Patent EP-B1-0,509,028 (cf. inter alia the height-overcoming mechanism explained with reference to Figures 7 and 8 of this patent). However, such differences in height can be avoided entirely, or at least almost entirely, by supporting the railway wagons on supports arranged on either side of the section of track before they are loaded and/or unloaded. When viewed in the direction of movement of the container, it is in this case even advantageous if, when connecting the slots to the grooves, there is a downward slope to their bases. A downward slope of this nature, in contrast to an upward slope, can easily be overcome by the rollers or wheels of the supports, which are designed as cars. Dutch patent application 1005456 published 8 september 1998 and based on this principle of supporting the railway wagons was filed by the applicant and on the basis of this NL-1005456 a corresponding application - WO-98/39191 published 11 september 1998 - is filed for this country simultaneously with the present application. This principle, which was expressed with regard to the scope of protection requested in Claims 1-6 of this Dutch patent application and further corresponding application filed simultaneously can readily be used if the supports are designed as cars which can move through the slots and grooves. However, in this case, instead of a flat connection between the loading floor and an adjoining platform, what is required is an essentially flat connection between the grooves and the adjoining slots. This Dutch NL-1.005.456 and simultaneously filed WO-98/39191 of the applicant also describes a further advantageous principle which can also be employed for cars which can move through slots and grooves. With regard to the scope of protection requested for this principle, reference is made here to Claims 7-9 of the said Dutch NL-1.005.456 and simultaneously filed corresponding WO-98/39191 for this country. This principle relates to the provision of a slope in the top surface of the loading and/unloading platform. In the case of supports which can move through slots and grooves and are designed as cars, a slope of this kind can also be employed on the bases of the slots formed in the platforms.

From the above text, it will be clear that wherever a railway terminal is mentioned, it is also possible to understand this as meaning an ordinary terminal for transferring containers, such as in particular a lorry terminal. In this case, railway wagon should in each case be read as lorry, such as a truck or lorry trailer. The section of track will then be a road which the lorries can drive onto and off, which road can also be referred to as drive-on or drive-off section. The claims are therefore also formulated in a correspondingly broader manner. It will furthermore be clear that a combination of a lorry terminal and railway terminal is entirely conceivable. The elevated section will in that case lie between the drive-on and drive-off road for lorries and the section of track. If appropriate, it may even be that one support is sufficient in this case, and can be used firstly to unload a container from a lorry on one side of the platform and then to transfer it onto a railway wagon on the other side of the platform, or else which can be used to transfer a container from a railway wagon on one side of the platform, via the platform, onto a lorry on the other side of the platform.

The invention furthermore relates to a lifting device for placing a container, which is standing on folded-out legs, onto the ground with the legs folded in, and for placing such a container which is standing on the ground with the legs folded in on folded-out legs. such as in particular a container in accordance with DIN EN 284, the lifting device comprising at least two cylinder/piston units, which are positioned at a distance from one another, and preferably four cylinder/piston units, which are preferably spaced apart in a rectangular pattern, these cylinder/piston units being disposed vertically in the ground, the piston rods being provided at their free ends with a bearing part on which the container can be supported, and it being possible to retract and extend the piston rods in pairs between a retracted position, in which the bearing part is completely recessed in the ground, and an extended position, in which the distance between the bearing parts and the ground is greater than the standing height of the folded-out legs. A lifting device of this kind allows in particular so-called DIN EN 284 containers (DIN stands for Deutsche Industrie Norm) to be placed with a bottom surface on the ground, or conversely to be placed on their folded-out legs with their base raised above the ground. Containers of this kind are used frequently, in particular in Germany, for road haulage. In this case, the container is transported with its legs folded in and placed on the lorry, the lorry being stopped at the designated destination, where the legs are folded out and the lorry is driven away beneath the container. If such containers are then to be transported by railway, the legs must first be folded in. This can be carried out with the aid of cranes, which can take hold of the containers from above. However, such cranes are unsuitable for transferring the container onto a railway wagon (or conversely from the railway wagon onto the platform), since the electrical wiring above the track will be in the way. The lifting device according to the invention is inexpensive to realize and can easily be incorporated in the ground, in particular in the platform, at the loading and/or unloading sites where the containers are transferred onto railway wagons or removed from railway wagons. The lorry will in this case drive such a DIN EN 284 container to above the cylinder/piston units, in order to leave the container behind in the usual manner at that location, resting on its legs, after which, by extending the piston rods, the container can be lifted slightly off the ground, so that the legs can be folded in, after which the piston rods can be retracted again in order to lower the container until its bottom surface rests on the ground. The bearing parts of the piston rods are then lowered into the ground by retracting the piston rod further, so that these bearing parts are no longer in the way. However, it will be clear that this lowering/ability to be lowered of the bearing parts into the ground is only an advantageous option, since it may also be useful if the container is supported just above the ground by bearing parts. The container may then be transferred from the platform onto the railway wagon, for example by means of the abovementioned trolleys. The lifting device according to the invention can be employed advantageously even for unloading such DIN EN 284 containers from the railway wagon. In this case, the container is moved, for example by means of the abovementioned trolleys, from the railway wagon onto the platform, until it is above the cylinder/piston units which are disposed in the ground, in this case in the platform. After optionally uncoupling the trolleys, the container can then be lifted by means of the cylinder/piston units to a height which is slightly higher than the standing height of the folded-out legs. This makes it possible to fold out the legs, after which the piston rods are retracted again, so that the container is placed on its folded-out legs, and then the piston rods can be retracted again entirely, optionally as far as the position in which they are recessed in the ground.

With regard to the containers with fold-in and fold-out legs which have just been discussed, in particular DIN EN 284 containers, it should be noted that they may also very readily be placed, by means of a terminal according to the invention, flat on a platform. In this case, the lorry will deposit the container provided with fold-in and fold-out legs on the drive-on and/or drive-off section, with the legs folded out, after which, by means of supports present in the platform (in accordance with the principle of the invention), a container can be lifted slightly by the extended supports, the legs of the container can be folded in and the container can be deposited on the platform by retracting the supports. Another very conceivable variant is that in which the same supports are used to lift a container off its folded-out legs on one side of the platform and transfer this container, via the platform, optionally with an interim storage period on the platform, to the other side of the platform, in order on the said other side to be placed on a railway wagon or even, if appropriate, on another lorry.

The present invention will be explained in more detail below with reference to the exemplary embodiments depicted in the drawing, in which:
Figure 1 shows a diagrammatic, perspective view of a railway terminal according to the invention;
Figure 2 shows a diagrammatic sectional view in a direction transverse to the section of track, depicting an advantageous first embodiment of the invention;
Figure 3 is a cross-sectional view on III-III in Figure 2;
Figure 4 is a diagrammatic sectional view in a direction transverse to a section of track, depicting a further, second embodiment of the invention;
Figure 5 is a view, partially in section, of the wheel suspension of a railway wagon according to the invention, as can be used in an embodiment in particular in accordance with Figure 4;
Figure 6 is a diagrammatic longitudinal and end view, partially in section, of the lifting device according to the invention.

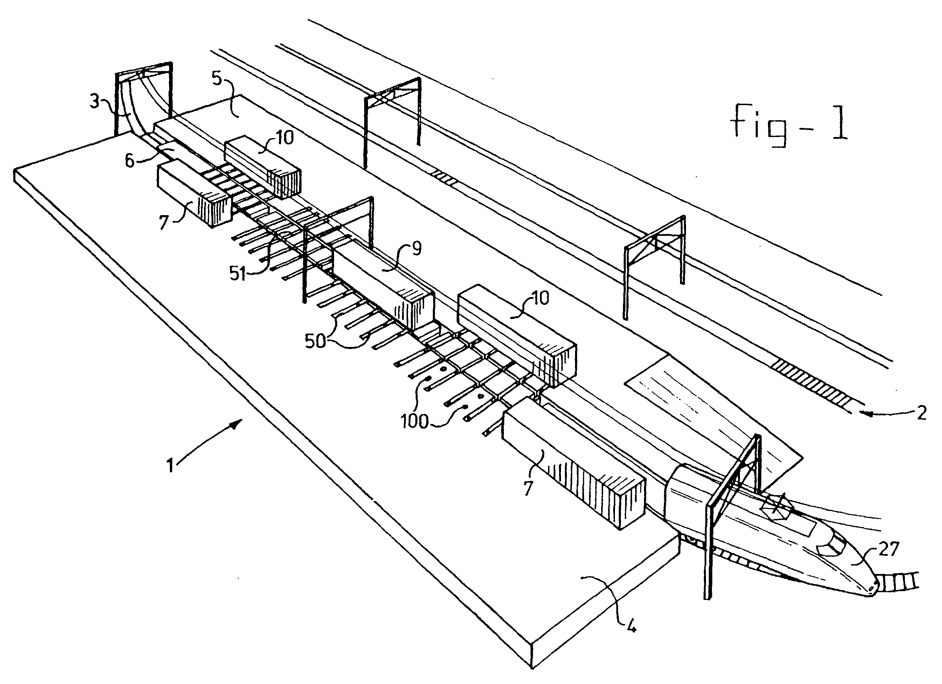

Figure 1 diagrammatically shows a railway terminal 1 which is positioned parallel to a through track 2. Figure 1 shows a track with overhead lines, but it will be clear to a person skilled in the art that the invention essentially applies also to a track without overhead lines.

The railway terminal 1 comprises a section of track 3, which branches off as a siding from the through track 2, running parallel to the latter and then rejoining this track 2 subsequently. A platform 4 and 5, which is at a higher level than the section of track 3, is provided on either side of the section of track 3. With a view to, inter alia, the logistics, it is advantageous here if one platform, platform 4, is designed as the loading platform, while the other platform, platform 5, is designed as the unloading platform. In this case, containers 7 are placed on the railway wagons 6 from the loading platform 4, while containers 10 unloaded from the railway wagons are placed on the unloading platform 5. Figure 1 furthermore shows a locomotive 27, with in this case, by way of example, five railway wagons 6 behind it. However, it will be clear that the number of railway wagons 6 may be much higher, and that accordingly the loading and unloading platforms 4 and 5, respectively, may be considerably longer.

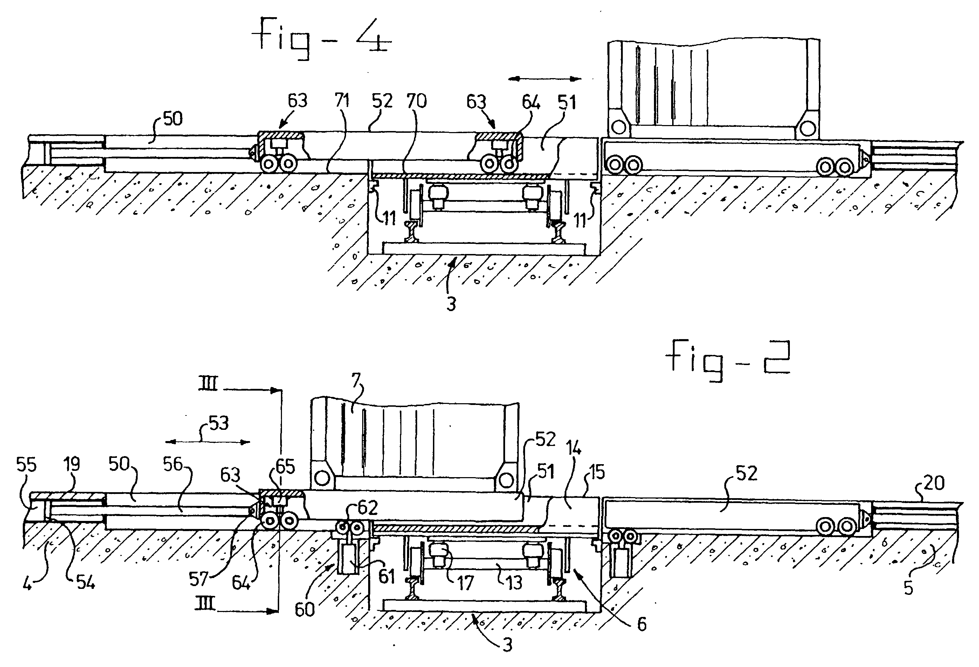

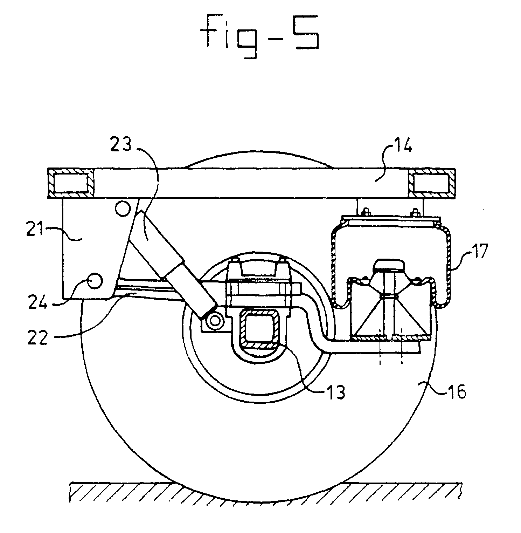

The containers to be loaded onto the railway wagons 6 are brought in by lorries and are placed on the loading platform 4 at a desired location along a section of track 3. It is preferred here to take into account the length of the railway wagons 6 and the railway wagon 6 onto which the container in question is to be loaded. By then stopping the railway wagons at a predetermined location, it is then possible to ensure the containers 7 to be loaded only have to be moved sideways. Supports which lie in slots 50 are used for this sideways movement, and these supports will be explained in more detail below with reference in particular to Figures 2 and 4. The supports lying in the slots can move to and fro in the slots and over the wagons, in order to transfer a container placed on them from a platform onto a wagon, and vice versa. Containers unloaded from a wagon 6 rest on unloading platform 5 and are denoted by the reference numeral 10. When the containers 10 are standing on the unloading platform 5, they can be collected by a lorry and taken away. It will be clear here that it is wholly conceivable, when a goods train is at a standstill at the railway terminal, merely to unload a number of containers and/or load a number of containers, while a further number of containers remains in place on the railway wagons, or optionally on the loading and/or unloading platform, in the ordinary way.

Figure 2 diagrammatically shows a sectional view transverse to the direction of the section of track 3. In this figure, a so-called loading platform 4 is shown on the left-hand side and a so-called unloading platform 5 is shown on the right-hand side. These platforms 4 and 5 are substantially identical, but with regard to the logistics it is advantageous to load wagons from one platform and to unload wagons from the opposite platform. However, it will be clear that the positions of the loading and unloading platform 4 and 5, respectively, may be exchanged and that these platforms 4 and 5 may each also fulfil the dual function of both loading platform and unloading platform. It is also possible for one of the two platforms to be dispensed with, if appropriate.

Figure 2 furthermore depicts a railway wagon 6, essentially comprising a substructure 13 which bears the wheels and a superstructure 14 which comprises the loading floor 15. The superstructure 14 is supported on the substructure 13 by means of suspension systems 17, in particular a pneumatic suspension, also known as air suspension.

According to the present invention, the loading and unloading platforms 4 and 5 are provided with slots 50, in which beam-like supports 52 can be moved to and fro in the direction of the double arrow 53 between a retracted position, which is shown on the right-hand side of Figure 2, and a completely projecting position, in which the support 52 projects over essentially the entire width of the wagon 6. The movement of the support 52 to and fro can be realized by means of a double-acting hydraulic cylinder 55 and piston 54 unit, which is connected to the support 52 via a piston rod 56 and a joint 57 allowing a vertical movement.

If appropriate, the top bearing surface of the supports 52 may project permanently above the top surface 19 or 20 of the respective platform, so that the sideways movement of containers 7 to and fro in the direction of double arrow 53 is not impeded by contact between the base of the containers 7 and the top surface of a platform. A container 7 can then be put down on the wagon 6 by activating the air suspension systems 17 of the wagon, so that the superstructure 14 is forced upwards with respect to the substructure 13. Due to the fact that the depth of the groove 51 formed in the wagon is greater than the vertical height of the support 52, it is in this case possible for the loading floor 15 to lift the container 7 off the support 52, after which the support 52 can be withdrawn, by means of the cylinder/piston unit 54, 55, into its retracted state. The containers supplied may in this case be placed by the lorries directly onto the supports 52 which project slightly out of the loading platform 4, and the containers to be removed can in this case be collected by the lorries directly from the supports 52 which project slightly out of the unloading platform 5.

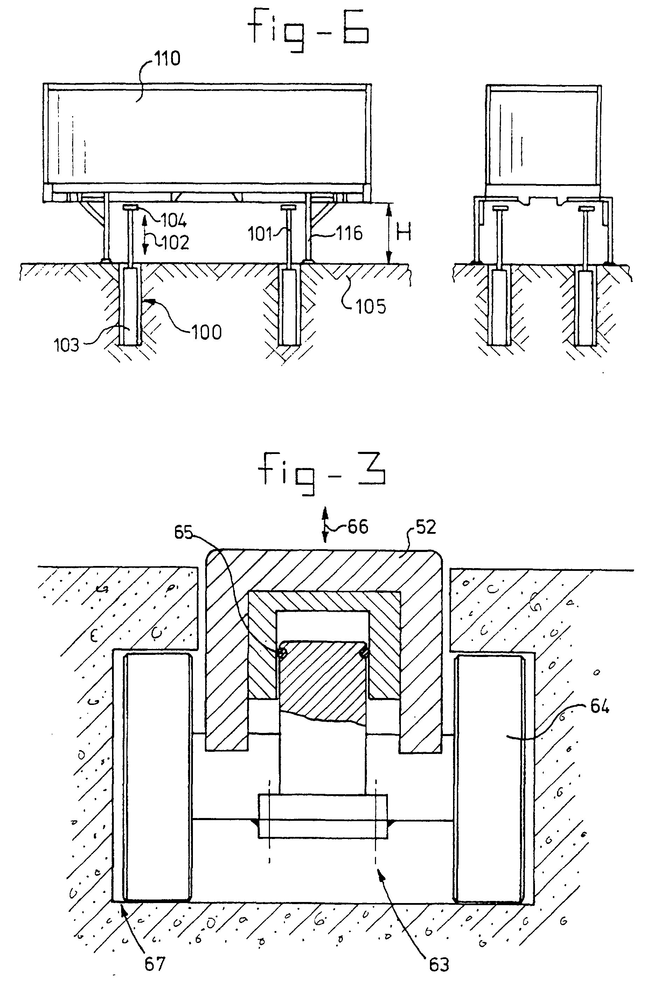

According to an advantageous embodiment, however, the supports 52 can be lowered or made to descend completely into the platform, as illustrated on the right-hand side of Figure 2. In the case of the embodiment in accordance with Figure 2, this is realized by means of rollers 62, which can be adjusted vertically by means of a cylinder/piston unit 61 which is arranged in and on the platform in question. This cylinder/piston unit 61, with associated vertically adjustable rollers 62, forms a so-called lifting means 60 arranged on the platform. In this case, the rollers 62 will remain in place and rotate as the support 52 is moved to and fro. In a corresponding manner, the support 52 is provided, in the region of its end facing the respective platform, with lifting means 63 comprising cylinder/piston unit 65, which is accommodated in the support 52 and has attached to it vertically adjustable wheels 64 which roll along when the support is displaced. These lifting means 63 are illustrated in more detail in Figure 3. By activating the cylinder/piston units 61 and 65, the support 52 is moved upwards, as indicated in Figure 3 by double arrow 66, and by removing the load on these cylinder/piston units the support 52 can be lowered back down in the opposite direction as far as a position in which it is recessed in the platform. It is possible in this way to lift a container placed above at least two supports off the loading platform 4 and, by extending the supports, to move it as far as above the loading floor 15 of a wagon. By relieving the load on the cylinder/piston units, the support 52 can then be lowered and descend completely into the groove 51 formed in the wagon 6, with the result that the container 7 is set down on the loading floor 15 of the wagon 6. It will be clear here that it may be advantageous to support the superstructure 14 on stops (as indicated by 11 in Figure 4, for example), so that the superstructure 14 does not sink downwards under the effect of the weight of the container 7, thus bringing the container 7 back into contact with the support 52. However, this renewed contact between the support 52 and the container 7 can also be prevented by making the groove 51 in the wagon sufficiently deep and allowing the support 52 to sink sufficiently deep into the groove 51. In order to unload a container 7 from a wagon 6, the support 52 will be extended in its low position into the groove 51 of a wagon, after which the lifting means 60 and 63 are activated, in order to lift the support 52 upwards and to raise the container 7 off the loading floor 15 of the wagon, after which the support 52 is to be withdrawn, in its position projecting above the unloading platform 5, as far as into the unloading platform 5, and is then to be lowered into the unloading platform 5, so that the container 7 comes to rest on the unloading platform 5.

As will be clear from Figure 2, in the embodiment illustrated tilting forces will act on the support 52 as a result of the nature of the arm, which in its extended position is cantilevered. According to the invention, tilting of the support 52 is advantageously counteracted by providing the slots 50 in the platforms on either side with horizontal, U-shaped longitudinal guides 67 which extend in the longitudinal direction of the slots 50 and in which the wheels 64 are accommodated with a vertical clearance (as can be seen in Figure 3).

Figure 4 shows a second embodiment of the invention, which essentially differs from the embodiment shown in Figure 2 by the fact that in this case the supports 52 are designed as movable cars, with lifting means 63 at both ends of the cars 52, as described with reference to Figure 2. If appropriate, lifting means 60, as described in Figure 2. may be used as extra support at the same location as in Figure 2. The advantage of the embodiment in accordance with Figure 4 is that the tilting forces acting on the support 52 when a container is being moved will be lower, and may even be absent, as a result of the free end of the support 52 being supported on the wagon 6. In order to ensure a flat connection between the base 70 of the groove 51 formed in the wagon 6 and the base 71 of the slot 50 formed in a platform, thus facilitating the transfer of the wheels 64 from the slot 50 to the groove 51. it is advantageous according to the invention if supports 11 are provided on either side of the section of track 3, on which supports the superstructure 14 of the wagon is supported by letting down the air suspension system 17. This principle forms the subject-matter of a Dutch patent application 1005456 filed by the applicant and of PCT application WO-98/39191 (corresponding to NL-A-1005456) filed simultaneously with the present application with respect to the same country/countries. In accordance with a further aspect of the abovementioned Dutch NL-1.005.456 and simultaneously filed further WO-98/39191, it may be advantageous here to provide the bases 71 of the slots 50 with a slope, in which case the bases 71 of the slots in the loading platform 4 will slope down towards the section of track 3, while the bases 71 of the slots 50 in the unloading platform will slope down away from the section of track 3.

It will furthermore be clear that in the embodiment in accordance with Figure 4, the container 7 can be picked up from a platform or the wagon and set down on a platform or wagon by actuating the lifting means 63, as described with reference to Figure 2.

It should be noted, with regard to Figure 1 and the large number of slots 50 and grooves shown per container, that in principle only two supports are required per container to be lifted, but that a greater number of supports offers more universal application with regard to different container dimensions.

Figure 5 shows a detailed view of the possible wheel suspension of a railway wagon 6 according to the invention. This figure only shows part of the superstructure 14 (for example, the loading floor 15 lying at a higher level than the wheel 16 is not shown). The superstructure 14 is provided with webs 21, to which a stepped bearing arm 22 is attached such that it can pivot about pivot 24, which bearing arm on its underside bears the substructure 13 to which the wheel 16 is attached. The stepped arm 22 is suspended from the superstructure 14 by means of an air suspension system 17, while a shock absorber 23 is also provided for the purpose of damping/absorbing vibrations and shocks. A suspension of this kind using a stepped arm 22 makes it possible to achieve a relatively low structural height of the railway wagon 6 as a whole. However, variants which are known per se from the prior art are known and can also be used for this purpose. The air suspension system 17 has the major advantage that it results in a relatively low noise level of the railway wagons at relatively high speeds. A further significant advantage, in particular with regard to the present invention, is that an air suspension system 17 of this kind can easily be manipulated so as to move the superstructure 14 upwards and downwards with respect to the substructure 13, so that it becomes possible to lower the superstructure 14 onto supports 11 arranged on either side of a section of track 3.

Figure 6 shows a completely different aspect, which can be employed both separately from that which has been discussed previously, but also, advantageously, in combination therewith. Figure 6 shows a lifting device. which is suitable in particular for placing so-called DIN EN 284 containers 110 with the bottom surface on the ground. DIN EN 284 containers 110 of this kind are fitted with four fold-in and fold-out limbs or legs 116. These containers are delivered by means of lorries, after which the legs are folded out and the lorry is driven away beneath the container(s). In order to bring containers of this kind into a position in which they can be handled and used on a railway terminal according to the invention, the fold-in legs first have to be folded in. To this end, the container has to be lifted, the legs have to be folded in and the container has to be set down. According to the invention, this can be carried out in a very advantageous manner by accommodating four cylinder/piston units 100, which are placed apart in a rectangular pattern, in the ground. These cylinder/piston units 100 may be hydraulically actuated, in order to push the piston rods 101 into and out of the cylinder 103 in the direction of double arrow 102. When using the lifting device according to the invention, all four of the cylinder/piston units will preferably move jointly. The free ends of the piston rods 101 are provided with bearing parts 104. In order to lift the DIN EN 284 container 110, the bearing parts 104 can be extended, by means of the piston rods 101, to a height which is greater than the standing height H, which is the height of the base of the container 110 above the ground 105 in the folded-out position of the legs 116. Therefore, when the container 110, together with legs 116, is lifted off the ground 105. the legs 116 can be folded in, and the piston rods 101 can be retracted again until the container 110 rests with its base 106 on the ground 105. The bearing parts 104 or support plates 104 can then be retracted down to and lowered into the ground 105. It will be clear that the lifting device as shown in Figure 6 can be used both to fold in the legs 116 and to set the base 106 of the container 110 down on the ground, as well as to lift the container 110 off the ground, fold out the legs 116 and place the container on the ground on its legs 116. A lifting device as shown in Figure 6 can easily be incorporated in a loading and/or unloading platform directly next to the section of track 3, as indicated diagramnatically in Figure 1 by the reference numerals 110. Furthermore, it will be clear that the support plates 104 of adjacent cylinder/piston units may be connected together to form a supporting beam. It will also be clear that if the support plates 104 are sufficiently wide, optionally with further support, two cylinder/piston units may also be sufficient.

Referring again to Figure 1, it should further be noted that it is diagrammatically shown in this figure that a so-called container 110 provided with fold-in and fold-out legs 16 can also be placed flat on a platform in a relatively simple manner by means of a terminal according to the invention. To this end, the platform 4 is provided on its longitudinal side facing away from the section of track 3 with a drive-on and/or drive-off road (not shown) for lorries. A lorry can use this drive-on and/or drive-off road for lorries to deliver a container 110 and can leave this container 110 behind at a desired location with the legs 116 folded out by firstly folding out the legs and then being driven away beneath the container 110. The container 110 can then be lifted slightly by extending two or more supports 200 out of the platform, after which the legs 116 can be folded in, and the container 110 can be moved onto the platform 4 by retracting the supports 200 again, and can optionally be set down on this platform 4 by allowing the supports 200 to be lowered into the platform 4. The support systems 200 may in this case be essentially identical to the system discussed with reference to Figure 2, which will readily be clear to a person skilled in the art. If the platform 4 is made less wide, it is possible to place the support systems 200 between supports 52. This makes it possible, by means of the support systems 200, to obtain a container 110 in a flat position on the platform 4, in order then to place this container 110 on a railway wagon by means of supports 52. Furthermore, it will also be clear that it is in principle entirely conceivable for lorries or their trailers to be designed in a manner corresponding to the design of the railway wagons 6. i.e. to provide the loading floor of such lorries or lorry trailers with grooves which can be aligned with the slots in the platform at the same level. In such a case, the support systems 200 may also be used to unload containers from lorries, or optionally to place them on lorries, on one side of the platform 4, and to transfer containers from the platform 4 onto railway wagons, or alternatively from railway wagons onto the platform, on the other longitudinal side of the platform 4.

## Claims

1. Terminal (1) for transferring containers, in particular a railway terminal for loading railway wagons (6) with containers (7, 9, 10) and/or unloading railway wagons (6) which are laden with containers (7, 9, 10), the terminal (1) comprising:
- a drive-on/drive-off section (3), such as a section of track, and
- at least one platform (4, 5), such as a loading (4) and/or unloading (5) platform, on which a container (7, 9, 10) can be placed,
the platform (4, 5) being provided with at least two slots (50) which extend transversely to the drive-on/drive-off section (3), which open onto the side of the platform directed to the drive-on/drive-off section (3) and which are arranged with a distance between them which is less than the length of a container (7, 9, 10) to be transferred, for example to be loaded or unloaded; each slot (50) being provided with a beam-like support (52) which can be displaced in the longitudinal direction of the slot (50) between a position in which it is essentially retracted into the platform (4, 5) and a position in which it projects by essentially the width of a container (7, 9, 10) to be transferred, or if appropriate a wagon (6) to be loaded and/or unloaded; and the slots (50) and/or beam like supports (52) being provided with lifting means (60, 63), by means of which each beam like support (52) can be moved up and down between a position in which it is recessed in the respective slot (50) and a raised position, in which its upper bearing surface projects above the platform (4, 5), **characterized in that** the platform (4,5) is permanently arranged along and adjacent to the said drive-on/drive-off section (3) on a level higher than the said drive-on/drive-off section (3), and **in that** the lifting means (60, 63) comprise guide rollers (62, 64) and/or guide wheels (62, 64) for guiding the beam like supports (50), the guide rollers (62, 64) and/or guide wheels (62, 64) being movable up and down with respect to the slot (50) on which they are provided and/or **in that** the lifting means (60, 63) comprise guide rollers (62, 64) and/or guide wheels (62, 64) for guiding the beam like supports (50), the guide rollers (62, 64) and/or guide wheels (62, 64) being movable up and down with respect to the beam like support (52) on which they are provided.

2. Terminal according to Claim 1, **characterized**
- **in that** both the slots (50) and the beam like supports (52) are provided with said guide rollers (62, 64) and/or guide wheels (62, 64);
- **in that** the rollers (62) and/or wheels (62) which are arranged on the slots (50) are situated, with respect to the rollers (64) and/or wheels (64) which are arranged on the beam like support (52), on said side of the platform directed to the drive-on or drive off section (3), and
- **in that** the rollers (64) and/or wheels (64) which are arranged on the support (52) are at a distance from that end of the support (52) which faces towards the drive-on or drive-off section (3), said distance being greater than the sum of:
- the width of the container to be transferred, or if appropriate the railway wagon to be loaded and/or unloaded, and
- the distance from the rollers (62) and/or wheels (62) which are arranged on the slot (50) to the container (7, 9, 10) to be transfcrred, or if appropriate the railway wagon (6) to be loaded and/or unloaded.

3. Terminal according to one of the preceding claims, **characterized in that** each slot (50) is provided with longitudinal guides (67) with downwardly directed contact surfaces, on which the beam like support (52) can come to bear in the event of it tilting.

4. Terminal according to Claims 3 and 1 or 2, **characterized in that** the longitudinal guides (67) accommodate the rollers (64) and/or wheels (64) which are arranged on the support (52) with a vertical clearance.

5. Terminal according to one of the preceding claims, **characterized in that** a hydraulic cylinder/piston unit (54, 55) is provided for each beam like support (52), which cylinder/piston unit (54, 55) is arranged in the platform (4, 5), extends in the longitudinal direction of the beam like support (52) and is attached, on the one hand, to the beam like support (52), preferably by means of the piston rod (56), and, on the other hand, to the loading and/or unloading platform (4, 5), preferably by means of the cylinder housing.

6. Terminal according to one of the preceding claims, **characterized in that** the terminal furthermore comprises at least one car (6), such as a railway wagon (6), the loading floor of which is provided with at least two grooves (51), which extend over its entire width, are open towards the longitudinal sides of the car (6) and have a width which is greater than the width of an abovementioned beam like support (52), in which case, on the one hand, the distance between at least two of these grooves (51) is less than the length of a container (7, 9, 10) to be loaded and unloaded and, on the other hand, the mutual positioning of said at least two of these grooves (51) is such that they can each be aligned with a slot (50) in the platform (4, 5).

7. Terminal according to Claim 6, **characterized in that** the width of each groove (51) is greater, preferably at least 1 cm greater, than the width of the beam like supports (52), and is, for example, 1 to 5 cm greater than the width of the beam like supports (52).

8. Terminal according to Claim 6 or 7, **characterized in that** the depth of the grooves (51) is greater than the height of the beam like supports (52).

9. Terminal according to one of Claims 6-8, **characterized in that** the car (6) is provided with setting means (17) for adjusting the height of the superstructure (14), comprising the loading floor, of the car (6) with respect to the substructure (13) of the car (6).

10. Terminal according to one of Claims 1-9, the terminal being a railway terminal for loading railway wagons (6) with containers (7, 9, 10) and/or unloading railway wagons (6) which are laden with containers (7, 9, 10), and the drive-on/drive-off section comprising a section of track (3).

## Patentansprüche

1. Terminal (1) zum Umschlagen von Containern, insbesondere ein Eisenbahnterminal zum Beladen von Eisenbahnfrachtwagen (6) mit Containern (7,9,10) und/oder Entladen von Eisenbahnfrachtwagen (6), die mit Containern (7,9,10) beladen sind, wobei das Terminal (1) umfasst:
- einen Auffahr/Wegfahr-Abschnitt (3), wie z.B. einen Gleisabschnitt, und
- mindestens eine Plattform (4,5), wie z.B. eine Lade (4)- und/oder Entlade (5)-Plattform, auf der ein Container (7,9,10) platziert werden kann,
wobei die Plattform (4,5) mit mindestens zwei Schlitzen (50) versehen ist, die sich quer zum Auffahr/Wegfahr-Abschnitt (3) erstrecken, die sich auf der Seite der Plattform, die zum Auffahr/Wegfahr-Abschnitt (3) gerichtet ist, öffnen und die mit einem Abstand zwischen ihnen angeordnet sind, der kleiner ist als die Länge eines Containers (7,9,10), der umzuschlagen ist, z.B. zu verladen oder auszuladen ist; wobei jeder Schlitz (50) mit einem balkenartigen Träger (52) versehen ist, der in Längsrichtung des Schlitzes (50) verlagert werden kann, und zwar zwischen einer Position, in der er im Wesentlichen in die Plattform (4,5) zurückgezogen ist, und einer Position, in der er um im wesentlichen die Breite eines Containers (7,9,10), der umzuschlagen ist, oder, wenn zutreffend, eines Frachtwagens (6), der zu beladen und/oder entladen ist, vorsteht; und wobei die Schlitze (50) und/oder balkenartigen Träger (52) mit Hebeeinrichtungen (60, 63) versehen sind, mittels deren jeder balkenartige Träger (52) auf und ab bewegt werden kann, und zwar zwischen einer Position, in der er in dem respektiven Schlitz (50) versenkt ist, und einer angehobenen Position, in der seine tragende Oberseite Über die Plattform (4,5) vorsteht, **dadurch gekennzeichnet, dass** die Plattform (4,5) entlang dem und benachbart zum Auffahr/Wegfahr-Abschnitt (3) dauernd auf einem höheren Niveau als der Auffahr/Wegfahr-Abschnitt (3) angeordnet ist, und dadurch, dass die Hebeeinrichtungen (60,63) Führungsrollen (62,64) und/oder Führungsräder (62,64) umfassen, um die balkenartigen Träger (50) zu führen, wobei die Führungsrollen (62,64) und/oder Führungsräder (62,64) in Bezug zum Schlitz (50), auf dem sie vorgesehen sind, auf- und ab bewegbar sind, und/oder dadurch, dass die Hebeeinrichcungen (60,63) Führungsrollen (62,64) und/oder Führungsräder (62,64) zum Führen der balkenartigen Träger (50) umfassen, wobei die Führungsrollen (62,64) und/oder Führungsräder (62,64) in Bezug zu dem balkenartigen Träger (52), auf dem sie vorgesehen sind, auf und ab bewegbar sind.

2. Terminal nach Anspruch 1, **dadurch gekennzeichnet,**
- **dass** sowohl die Schlitze (50) als auch die balkenartigen Träger (52) mit den Führungsrollen (62,64) und/oder Führungsradern (62,64) versehen sind;
- **dass** sich die Rollen (62) und/oder Räder (62), die auf den Schlitzen (50) angeordnet sind, in Bezug zu den Rollen (64) und/oder Rädern (64), die auf dem balkenartigen Träger (52) angeordnet sind, auf der Seite der Plattform befinden, die zum Auffahr- oder wegfahrabschnitt (3) gerichtet ist, und
- **dass** die Rollen (64) und/oder Rader (64), die auf dem Träger (52) angeordnec sind, in einem Abstand von demjenigen Ende des Trägers (52) angeordnet sind, das dem Auffahr- oder Wegfahr-Abschnitt (3) zugewandt ist, wobei der Abstand größer ist als die Summe aus:
- der Breite des Containers, der umzuschlagen ist, oder, wenn zutreffend, des Eisenbahnfrachtwagens, der zu beladen und/oder entladen ist, und
- dem Abstand von den Rollen (62) und/oder Radern (62), die auf dem Schlitz (50) angeordnet sind, zum Container (7,9,10), der umzuschlagen ist, oder, wenn zutreffend, zum Eisenbahnfrachtwagen (6), der zu beladen und/oder entladen ist.

3. , Terminal nach einem der vorangehenden Ansprüche, **dadurch gekennzeichnet, dass** jeder Schlitz (50) mit Langsführungen (67) mit nach unten gerichteten Berührungsflächen versehen ist, auf denen der balkenartige Träger (52), im Fall, dass er kippt, zur Auflage kommen kann.

4. Terminal nach den Ansprüchen 3 und 1 oder 2, **dadurch gekennzeichnet, dass** die Längsführungen (67) die Rollen (64) und/oder Rader (64), die auf dem Träger (52) angeordnet sind, mit einem vertikalen Freiraum aufnehmen.

5. Terminal nach einem der vorangehenden Ansprüche, **dadurch gekennzeichnet, dass** eine Hydraulik-Zylinder/Kolben-Einheit (54,55) für jeden balkenartigen Trager (52) vorgesehen ist, welche Zylinder/Kolben-Einheit (54,55) in der Plattform (4,5) angeordnet ist, sich in Langsrichtung des balkenartigen Trägers (52) erstreckt und einerseits am balkenartigen Träger (52), vorzugsweise mittels der Kolbenstange (56), und andererseits an der Lade- und/oder Entladeplattform (4,5), vorzugsweise mittels des Zylindergehäuses, angebracht ist.

6. Terminal nach einem der vorangehenden Ansprüche, **dadurch gekennzeichnet, dass** das Terminal weiter mindestens einen Wagen (6) umfasst, wie z.B. einen Eisenbahnfrachtwagen (6), dessen Ladefläche mit mindestens zwei Rillen (51) versehen ist, die sich über seine ganze Breite erstrecken, in Richtung auf die Längsseiten, des Wagens (6) offen sind und eine Breice aufweisen, die größer ist als die Breite eines oben erwähnten balkenarcigen Trägers (52), in welchen Fall einerseits der Abscand zwischen mindestens zwei von diesen Rillen (51) kleiner ist als die Länge eines Containers (7,9,10), der zu verladen und auszuladen ist, und andererseits die gegenseitige Positionierung der mindestens zwei von diesen Rillen (51) so ist, dass sie jeweils mit einem Schlitz (50) in der Plattform (4,5) ausgerichtet sein können.

7. Terminal nach Anspruch 6, **dadurch gekennzeichnet, dass** die Breite jeder Rille (51) größer ist, vorzugsweise mindestens 1 cm größer, als die Breite der balkenartigen Träger (52), und z.B. 1 bis 5 cm größer ist als die Breite der balkenartigen Träger (52).

8. Terminal nach Anspruch 6 oder 7, **dadurch gekennzeichnet, dass** die Tiefe der Rillen (51) größer ist als die Hohe der balkenartigen Träger (52).

9. Terminal nach einem der Ansprüche 6-8, **dadurch gekennzeichnet, dass** der wagen (6) mit Einstelleinrichtungen (17) zum Einstellen der Höhe des die Ladefläche umfassenden Oberbaus (14) des Wagens (6) in Bezug zum Unterbau (13) des Wagens (6) versehen ist.

10. Terminal nach einem der Ansprüche 1-9, wobei das Terminal ein Eisenbahnterminal zum Beladen von Eisenbahnfrachtwagen (6) mit Containern (7,9,10) und/oder Entladen von Eisenbahnfrachtwagen (6) ist, die mit Containern (7,9,10) beladen sind. und wobei der Auffahr/Wegfahr-Abschnitt einen Gleisabschnitt (3) umfasst.

## Revendications

1. Terminal (1) pour transférer des conteneurs, en particulier un terminal de chemin de fer pour charger des wagons de chemin de fer (6) de conteneurs (7, 9, 10) et/ou décharger des wagons de chemin de fer (6) qui sont chargés de conteneurs (7, 9, 10), le terminal (1) comprenant :
- une section de chargement/déchargement (3), telle qu'une section de voie, et
- au moins une plate-forme (4, 5), telle qu'une plate-forme de chargement (4) et/ou déchargement (5), sur laquelle un conteneur (7, 9, 10) peut être placé,
la plate-forme (4, 5) étant pourvue d'au moins deux fentes (50) qui s'étendent transversalement à la section de chargement/déchargement (3), qui s'ouvrent du côté de la plate-forme dirigé vers la section de chargement/déchargement (3) et qui sont agencées avec une distance entre elles qui est inférieure à la longueur d'un conteneur (7, 9, 10) à transférer, par exemple à charger ou décharger ; chaque fente (50) étant pourvue d'un support en forme de poutre (52) qui peut être déplacé dans le sens longitudinal de la fente (50) entre une position dans laquelle il est essentiellement rétracté dans la plate-forme (4, 5) et une position dans laquelle il s'étend essentiellement de la largeur d'un conteneur (7, 9, 10) à transférer, ou le cas échéant d'un wagon (6) à charger et/ou décharger ; et les fentes (50) et/ou les supports en forme de poutre (52) étant pourvus de moyens de levage (60, 63), à l'aide desquels chaque support en forme de poutre (52) peut être élevé et abaissé entre une position dans laquelle il est enfoncé dans la fente (50) respective et une position élevée, dans laquelle sa surface de support supérieure s'étend au-dessus de la plate-forme (4, 5), **caractérisé en ce que** la plate-forme (4, 5) est agencée en permanence le long et à proximité de ladite section de chargement/déchargement (3) sur un niveau plus élevé que ladite section de chargement/déchargement (3), et **en ce que** les moyens de levage (60, 63) comprennent des rouleaux de guidage (62, 64) et/ou des roues de guidage (62, 64) pour guider les supports en forme de poutre (52), les rouleaux de guidage (62, 64) et/ou les roues de guidage (62, 64) étant mobiles vers le haut et vers le bas par rapport à la fente (50) sur laquelle ils sont prévus, et/ou **en ce que** les moyens de levage (60, 63) comprennent des rouleaux de guidage (62, 64) et/ou des roues de guidage (62, 64) pour guider les supports en forme de poutre (52), les rouleaux de guidage (62, 64) et/ou les roues de guidage (62, 64) étant mobiles vers le haut et vers le bas par rapport au support en forme de poutre (52) sur lequel ils sont prévus.

2. Terminal selon la revendication 1, **caractérisé :**
- **en ce que** les deux fentes (50) et les supports en forme de poutre (52) sont pourvus desdits rouleaux de guidage (62, 64) et/ou desdites roues de guidage (62, 64) ;
- **en ce que** les rouleaux (62) et/ou les roues (62) qui sont agencés sur les fentes (50) sont situés, par rapport aux rouleaux (64) et/ou aux roues (64) qui sont agencés sur le support en forme de poutre (52), du côté de la plate-forme dirigé vers la section de chargement ou de déchargement (3), et
- **en ce que** les rouleaux (64) et/ou les roues (64) qui sont agencés sur le support (52) sont à une certaine distance de l'extrémité du support (52) qui est orientée vers la section de chargement ou de déchargement (3), ladite distance étant supérieure à la somme de :
• la largeur du conteneur à transférer, ou le cas échéant du wagon de chemin de fer à charger et/ou décharger, et
• la distance entre les rouleaux (62) et/ou les roues (62) qui sont agencés sur la fente (50) et le conteneur (7, 9, 10) à transférer, ou le cas échéant le wagon de chemin de fer (6) à charger et/ou décharger.

3. Terminal selon l'une des revendications précédentes, **caractérisé en ce que** chaque fente (50) est pourvue de guides longitudinaux (67) comportant des surfaces de contact dirigées vers le bas, sur lesquelles le support en forme de poutre (52) peut venir s'appuyer dans le cas où il basculerait.

4. Terminal selon les revendications 3 et 1 ou 2, **caractérisé en ce que** les guides longitudinaux (67) reçoivent les rouleaux (64) et/ou les roues (64) qui sont agencés sur le support (52) avec un jeu vertical.

5. Terminal selon l'un des revendications précédentes, **caractérisé en ce qu'**une unité à vérin/piston hydraulique (54, 55) est prévue pour chaque support en forme de poutre (52), laquelle unité à vérin/piston (54, 55) est agencée dans la plate-forme (4, 5), s'étend dans le sens longitudinal du support en forme de poutre (52) et est fixée, d'une part, au support en forme de poutre (52), de préférence au moyen de la tige de piston (56), et, d'autre part, à la plate-forme de chargement et/ou déchargement (4, 5), de préférence au moyen du corps de vérin.

6. Terminal selon l'une des revendications précédentes, **caractérisé en ce que** le terminal comprend, en outre, au moins une voiture (6), par exemple un wagon de chemin de fer (6), dont le plancher de chargement est pourvu d'au moins deux rainures (51), qui s'étendent sur toute sa largeur, sont ouvertes vers les côtés longitudinaux de la voiture (6) et ont une largeur supérieure à la largeur d'un support en forme de poutre (52) susmentionné, auquel cas, d'une part, la distance entre au moins deux de ces rainures (51) est inférieure à la longueur d'un conteneur (7, 9, 10) à charger et décharger et, d'autre part, le positionnement mutuel desdites au moins deux de ces rainures (51) est tel qu'elles peuvent être alignées chacune avec une fente (50) dans la plate-forme (4, 5).

7. Terminal selon la revendication 6, **caractérisé en ce que** la largeur de chaque rainure (51) est supérieure, de préférence supérieure d'au moins 1 cm, à la largeur des supports en forme de poutre (52), et est, par exemple, supérieure de 1 à 5 cm à la largeur des supports en forme de poutre (52),

8. Terminal selon la revendication 6 ou 7, **caractérisé en ce que** la profondeur des rainures (51) est supérieure à la hauteur des supports en forme de poutre (52).

9. Terminal selon l'une des revendications 6 à 8, **caractérisé en ce que** la voiture (6) est pourvue de moyens de réglage (17) pour ajuster la hauteur de la superstructure (14), y compris le plancher de chargement, de la voiture (6) par rapport à la sous-structure (13) de la voiture (6).

10. Terminal selon l'une des revendications 1 à 9, le terminal étant un terminal de chemin de fer pour charger des wagons de chemin de fer (6) de conteneurs (7, 9, 10) et/ou décharger des wagons de chemin de fer (6) qui sont chargés de conteneurs (7, 9, 10), et la section de chargement/déchargement comprenant une section de voie (3).
